# NEUE EUROPÄISCHE PATENTSCHRIFT

(11) **EP 2 208 092 B2**
(45) Veröffentlichungstag und Bekanntmachung des Hinweises auf die Entscheidung über den Einspruch: **15.09.2021**
(45) Hinweis auf die Patenterteilung: 29.01.2014
(21) Anmeldenummer: 08846417.7
(22) Anmeldetag: 07.11.2008
(51) Int. Cl.: G01V 8/20

(54) **SYSTEM ZUR FESTSTELLUNG EINES OBJEKTS IN EINER ÜBERWACHUNGSFLÄCHE**
SYSTEM FOR DETECTING AN OBJECT ON A MONITORING SURFACE
SYSTÈME DE DÉTECTION D'UN OBJET SUR UNE SURFACE DE SURVEILLANCE

(30) Priorität: 07.11.2007 DE 102007053557; 16.06.2008 DE 102008028280
(43) Veröffentlichungstag der Anmeldung: 21.07.2010
(73) Patentinhaber: Cedes AG, 7302 Landquart (CH)
(72) Erfinder: HUG, René, CH-8887 Mels (CH); BRÄUER, Gerhard, CH-7000 Chur (CH); HÜGLI, Heinz, CH-7402 Bonaduz (CH)
(74) Vertreter: Otten, Roth, Dobler & Partner mbB Patentanwälte
(86) Internationale Anmeldenummer: PCT/EP2008/009412
(87) Internationale Veröffentlichungsnummer: WO 2009/059782

(56) Entgegenhaltungen:
- EP-A- 0 709 335
- EP-A1- 0 709 335
- WO-A-01/69582
- DE-A1- 19 815 147
- DE-A1- 19 815 150
- DE-A1-102004 057 811
- DE-B4- 19 861 128
- FR-A- 2 603 386
- Kriesel, Werner R et al: "ASI - Das Aktuator-Sensor-Interface für die Automation", 1994, Carl Henser Verlag

## Beschreibung

Die Erfindung betrifft ein System zur Feststellung eines Objekts in einer Überwachungsfläche nach dem Oberbegriff des Anspruchs 1.

### Stand der Technik:

Es sind Systeme bekannt, bei welchen Einzellichtschranken mit Sender und Empfänger über Weichenelemente miteinander verbunden werden, wodurch eine globale Auswertung des dadurch entstandenen Lichtschrankennetz.es ermöglicht ist. Das heißt, es steht ein Signal zur Verfügung, ob im Lichtschrankenfeld eine Lichtschranke unterbrochen ist oder nicht.

### Aufgabe und Vorteile der Erfindung:

Der Erfindung liegt die Aufgabe zugrunde, eine Auswertung eines Verbundes aus einer Mehrzahl von Sensoren, bestehend aus einem Sender und einem Empfänger, zu verbessern.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einem System zur Feststellung eines Objekts in einer Überwachungsfläche aus, das eine Mehrzahl von Sensoren bestehend aus wenigstens einem Sender und wenigstens einem Empfänger sowie eine Elektronikeinheit zur Auswertung der Empfänger umfasst. Der Kern der Erfindung liegt darin, dass die Elektronikeinheit in der Lage ist, einem Sender und/oder Empfänger eine Ansprechadresse zuzuteilen, wobei eine Adresszuteilung in einer Weise erfolgt, dass nach der Adresszuteilung eine Zuordnung von Empfängern zu Sendern ermöglicht ist.

Dieser Vorgehensweise liegen folgende Überlegungen zugrunde:

Das erfindungsgemäße System kann zum Beispiel für die Überwachung großer Überwachungsflächen, wie zum Beispiel bei Rolltreppen, Gehsteigen, Schleusen, Türen oder Toren eingesetzt werden, wobei die Sensoren von einem Controller überwacht werden. Beispielsweise werden zur Absicherung von Rolltreppen Überwachungsabstände von 30 cm im geraden Teil und 20 cm im gekrümmten Teil nach europäischer Norm gefordert. Häufig besitzen Rolltreppen keine sensorische Überwachung. Nach einem Stromausfall darf die Rolltreppe nur eingeschaltet werden, wenn festgestellt wurde, dass sich niemand auf der Rolltreppe befindet. Bei Rolltreppen ohne sensorische Überwachung wird die Rolltreppe daher von Hand eingeschaltet, wobei zuvor überprüft werden muss, ob die Rolltreppe tatsächlich leer ist. Dies ist vergleichsweise aufwändig. Gewünscht ist ein automatischer Anlauf, der mit einer Sensor-Überwachung möglich ist. Bei bekannten sensorischen Überwachungssystemen für Rolltreppen werden eine Vielzahl von Lichtschranken eingesetzt, um die oben genannten Überwachungsabstände realisieren zu können. Diese Lichtschranken arbeiten autonom und liefern über eine gemeinsame Leitung ein Signal an einen Controller. Dies hat den Nachteil, dass nicht ersichtlich ist, welche Lichtschranke ein Objektfeststellungssignal übermittelt. Auch bei einem Defekt ist dies problematisch, weil alle Lichtschranken separat überprüft werden müssen, um einen Fehler auffinden zu können. Bei der erfindungsgemäßen Vorgehensweise treten solche Nachteile nicht auf, da die Elektronikeinheit aufgrund der Adressierung und Zuordnung von Empfängern und Sendern sofort erkennen kann, von z.B. welchem Empfänger eines Sensorpaares ein Objektfeststellungssignal stammt. Falls dieser Empfänger gar kein Objekt feststellen kann, weil keines vorhanden ist, muss es sich um einen Defekt des Sensors handeln.

Die Zuordnung von Ansprechadressen erfolgt in einer Weise, dass nach der Verteilung der Adressen die physikalische Reihenfolge der Sender und Empfänger und damit auch eine etwaige Paarbildung im System, z.B. einem Bus der Elektronikeinheit zur Verfügung steht.

Im Weiteren ist es besonders vorteilhaft, wenn Empfänger und/oder Sender in separaten Baueinheiten angeordnet sind.

Durch die Anordnung von Empfängern/Sendern in separaten Baueinheiten ist das System nicht an vorgegebene Detektionsauflösungen bzw. Überwachungslängen gebunden wie es bei vorgefertigten Lichtvorhängen der Fall ist.

Die Erfindung ist insbesondere dann von Vorteil, wenn eine Vielzahl von Sensoren zum Einsatz kommt, die zu synchronisieren sind, und dabei eine Überwachung von Anlagen von unterschiedlicher Form und Größe erfolgen soll.

In einer separaten Baueinheit eines Empfängers können mehrere Empfänger enthalten sein. Auch ist eine Unterbringung von wenigstens einem Empfänger und einem Sender in einer Baueinheit denkbar, zum Beispiel wenn der Empfänger vom Sender über Reflektionsmittel ein Signal empfängt.

In einer besonders bevorzugten Ausgestaltung der Erfindung ist die Elektronikeinheit dazu ausgelegt, Empfänger selektiv auszuwerten. Dies kann zum Beispiel dadurch erfolgen, dass bei der Auswertung einzelne Empfänger ausgeblendet werden, oder der Empfänger so ausgebildet ist, dass er über die Elektronikeinheit ganz abgeschaltet werden kann. Welche Empfänger an einer Objektauswertung teilnehmen, kann somit von der Elektronikeinheit bestimmt werden. Eine solche Vorgehensweise ist auch vorteilhaft für eine Synchronisation von Sendern und Empfängern. Denn es ist möglich, von der Elektronikeinheit aus unterschiedliche Synchronisationsmuster vorzugeben. Beispielsweise löst die Elektronikeinheit an einem Sender einen Puls aus, worauf eine Überprüfung durch selektive Auswahl des Empfängers stattfindet, ob der Empfänger den Puls in der gewünschten Weise empfangen und ein entsprechendes Signal der Elektronikeinheit zur Verfügung gestellt hat.

Dadurch lassen sich auch Übersprecheffekte feststellen, wenn zum Beispiel für ein Sendesignal nicht der zugeordnete Empfänger ausgewertet wird, sondern Nachbarempfänger von der Elektronikeinheit ausgelesen werden.

Um eine Vielzahl von Überprüfungs- und Objekterkennungsmustern durchführen zu können, ist es bevorzugt, wenn die Elektronikeinheit ausgelegt ist, Sender gezielt ansteuern zu können.

In einer besonders bevorzugten Ausgestaltung der Erfindung sind Empfänger dazu ausgebildet, ein empfängerbezogenes Objekterkennungssignal zu erzeugen. Beispielsweise übermittelt der Empfänger bei der Detektion eines Objektes ein Erkennungssignal, zum Beispiel eine Adresse.

Im Weiteren ist es bevorzugt, wenn die Elektronikeinheit dazu ausgebildet ist, Muster auswerten zu können, in welcher Abfolge Empfänger ein Objekt erkennen. Damit ist es beispielsweise möglich, die Bewegungsrichtung eines Objekts in einer überwachten Fläche feststellen zu können.

Außerdem ist es bevorzugt, wenn die Elektronikeinheit ausgebildet ist, die Empfänger für eine Auswertung sequentiell anzusprechen. Beispielsweise sind die Empfänger mit einer Leitung verbunden, die vom jeweiligen Empfänger unterbrochen wird. Über diese Leitung kann ein Aktivierungssignal gesendet werden, wobei abhängig zum Beispiel von einem vorgegebenen Takt das Aktivierungssignal von Empfänger zu Empfänger weiter geschoben wird. Immer dann, wenn ein Empfänger durch das Aktivierungssignal aktiv ist, wird das Empfängersignal ausgewertet. Durch diese Maßnahme "weiß" die Elektronikeinheit nicht nur welcher Empfänger gegebenenfalls ein Objektfeststellungssignal liefert, sondern auch, wo dieser Empfänger in der Kette der Empfänger räumlich angeordnet ist, selbstverständlich abhängig von der Art der Verdrahtung der Empfänger.

Damit wird eine Art "Schieberegister"-Auswertung für die Empfänger realisiert. Eine entsprechende Vorgehensweise kann für die Ansteuerung der Sender realisiert werden.

Sensoren bestehend aus wenigstens einem Sender und wenigstens einem Empfänger können insbesondere auf der Basis von Licht und/oder Ultraschall arbeiten. Es können viele bekannte Sensortypen eingesetzt werden, wie zum Beispiel, Einzellichtschranken, Gabellichtschranken, Lichttaster, 2D- und 3D-Sensoren, die nach bekannten Techniken, wie z.B. Time of Light, Pulslaufzeit oder dem Stereoprinzip arbeiten, Kamerasensoren, Reflektionslichtsensoren, Lichtschranken mit mehreren Lichtstrahlen (Lichtvorhänge) Sensor- und Empfängersysteme, die über einen Reflektor arbeiten, um nur eine Auswahl der Möglichkeiten zu nennen.

Die Baueinheiten, in welchen die Empfänger untergebracht sind, umfassen vorzugsweise ein Gehäuse, das zum Beispiel über Steckverbinder mit einem benachbarten Gehäuse verbunden werden kann. Beispielsweise sind sowohl Sender als auch Empfänger in getrennten Gehäusen untergebracht, die über Steckverbinder jeweils mit einander verbunden werden können. Auf diese Weise lässt sich schnell und sicher eine Anordnung eines Sensornetzes aus miteinander verbundenen Empfängern einerseits und miteinander verbundenen Sendern andererseits über große Distanzen, insbesondere zur Überwachung von großen Rolltreppen, installieren.

Um einer Bedienperson einen schnellen Überblick über den Sensorzustand zu liefern, wird im Weiteren vorgeschlagen, dass die Elektronikeinheit Anzeigemittel, zum Beispiel eine optische Anzeige umfasst, die anzeigt, welcher Empfänger ein Objekt detektiert.

Des Weiteren ist es vorteilhaft, wenn die Anzeigemittel anzeigen, ob ein Empfänger und/oder Sender defekt ist. Der Ausfall eines Sensors kann z.B. dadurch erkannt werden, dass eine Kommunikation auf dem Bus nicht mehr stattfindet oder ein Empfänger ein Signal empfängt, obwohl keines ausgestrahlt wurde.

Des Weiteren ist es denkbar, dass die Elektronikeinheit dazu ausgelegt ist, Signale von mehreren Sensoren auszuwerten, um auf einen Fehler zu schließen. Beispielsweise werden zwei Sender/Empfängerpaare am gleichen Ort montiert. Dementsprechend müssen die Paare immer das gleiche ausgeben. Kommen bei der Elektronikeinheit unterschiedliche Signale an, so muss ein Fehler vorliegen.

Um ein besonders flexibles System zu schaffen, wird im Weiteren vorgeschlagen, dass Sender und Empfänger über ein Bussystem mit der Elektronikeinheit in Verbindung stehen. Denkbar sind Standard-Bussysteme, wie zum Beispiel CAN, SPI oder EUSART-Bus. Vorzugsweise wird eine Leitung zwischen den Sensoren nicht unterbrochen. Sensorelemente werden vorzugsweise auf eine vorgegebene Busleitung einfach aufgesetzt.

In einer einfachen Ausgestaltung kann das Bussystem ein "2-Draht Bus" sein. Dementsprechend erfolgt die Spannungsversorgung sowie Adressierung und/oder Auswertung über zwei Leitungen. In diesem Fall werden vorzugsweise Adresssignale und/oder Auswertesignale auf die Spannungsversorgung aufmodelliert.

An einem Verbindungspunkt zu einem Sensor ist vorzugsweise ein ASIC angeordnet, welches auf dem 2-Draht Bus aufsitzt und so ausgelegt ist, dass eine Kommunikation mit der Elektronikeinheit stattfinden kann. Ein ASIC ist ein anwenderspezifischer integrierter Schaltkreis.

In einer weiteren besonders bevorzugten Ausgestaltung der Erfindung sind Sender und Empfänger gegenüberliegend angeordnet, wobei allerdings jeweils die Sender und Empfänger auf unterschiedlichen Seiten liegen. Denkbar ist eine alternierende Anordnung, bei welcher auf einer Seite auf einen Sender ein Empfänger des nächsten Sender-EmpfängerPaares folgt. Auf diese Weise lassen sich Übersprech-Effekte minimieren.

Sender und Empfänger können grundsätzlich separate Gehäuse aufweisen, wobei sowohl Sender als auch Empfänger an einem Bussystem angeschlossen sind. Vorzugsweise lassen sich Sender und Empfänger jeweils individuell adressieren.

Es ist denkbar, dass Sender und Empfänger am gleichen Bussystem liegen. Auf diese Weise ist lediglich ein Bussystem, z.B. ein Ringbus erforderlich. Grundsätzlich muss die Zahl von Sendern und Empfänger nicht gleich sein. Beispielsweise wertet ein Empfänger mehrere Sender aus oder ein Sender bedient mehrere Empfänger.

Im Weiteren weist die Elektronikeinheit Anschlüsse zu einem Bus auf. Durch diese Maßnahme kann die Elektronikeinheit einfach gestaltet werden, da lediglich ein Anschluss pro Bus-Strang erforderlich ist.

Im Weiteren ist es bevorzugt, wenn die Elektronikeinheit dazu ausgelegt ist, z.B. Geschwindigkeit, Bewegungsrichtung oder Größe von Objekten anhand der Sensorsignale zu ermitteln. Um diese Funktionalität breit zu stellen, kann ein Teach-in Mode vorgesehen sein. Im Weiteren können die Sender und Empfänger in einer Weise angesteuert werden, dass sie, wenn sie nicht benötigt werden, abgeschalten werden. Auf diese Weise kann Energie gespart und/oder die Lebensdauer erhöht werden.

Die Empfänger können so ausgebildet sein, dass eine Auswertung von Pulsen von Sendern ermöglicht ist. Beispielsweise können die Sender Signale frei Senden, wobei die Empfänger sich automatisch auf die Sendersignale, z.B. Pulse synchronisieren. Über den Bus wird vorzugsweise lediglich der Zustand des Empfängers abgefragt.

In einer überdies bevorzugten Ausgestaltung der Erfindung lassen sich Sender und/oder Empfänger auf eine Busleitung in einfacher Weise aufschnappen. Die Sender und/oder Empfänger und/oder ein Sockelblock kann dabei so ausgestaltet sein, dass eine Datenleitung dabei aufgetrennt wird, sodass die Sender und/oder Empfänger in der Datenleitung nach dem Anbringen in einer Reihenschaltung liegen.

Damit eine gewünschte Bustopologie entsteht, ist es denkbar, dass die Sender und/oder Empfänger bereits Anschlusskabel und Stecker aufweisen. Die Stecker lassen sich dann vorzugsweise dazu verwenden, benachbarte Sender oder Empfänger direkt oder über ein Zwischenstück miteinander elektrisch zu verbinden.

### Zeichnungen:

Mehrere Ausführungsbeispiele der Erfindung sind in den Zeichnungen dargestellt und werden unter Angaben weiterer Vorteile und Einzelheiten nachstehend näher erläutert. Es zeigen:
- Figur 1: eine schematische Prinzipdarstellung eines Sensornetzes aus unabhängigen Sensoren und Empfängern,
- Figur 2: die Ankopplung eines Empfängers oder Senders an eine Versorgungs- bzw. Datenleitung in einem schematischen Blockdiagramm,
- Figur 3: in entsprechender Darstellung wie in Figur 2 eine weitere Möglichkeit der Ankopplung eines Senders und/oder Empfängers an eine Versorgungs- /Datenleitung,
- Figur 4: in einer schematisierten Darstellung eine Busleitung mit Ankoppelstellen,
- Figur 5: in einer zu Figur 1 vergleichbaren Darstellung ein Sensornetz mit alternierend angeordneten Sender- /Empfängerpaaren,
- Figur 6 und 7: in einer schematischen Darstellung zwei Möglichkeiten der elektrischen Verbindung von Sendern und Empfängern und
- Figur 8: einen schematischen Ausschnitt eines Datenbusses mit Busteilnehmern.

### Beschreibung der Ausführungsbeispiele:

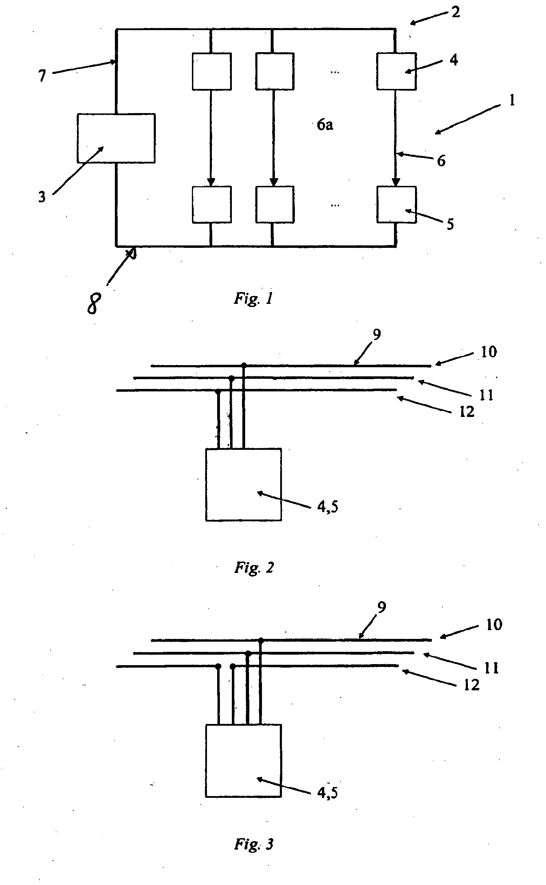

In Figur 1 ist ein Überwachungssystem 1 bestehend aus einem Sensornetz 2 und einem Controller 3 abgebildet. Im Sensornetz 2 sind eine Vielzahl von Paaren aus Sendern 4 und Empfängern 5 angeordnet.

Jeder Sender 4 und jeder Empfänger 5 ist vorzugsweise als separate Baueinheit ausgeführt. Alle Sender und Empfänger 4,5 stehen mit dem Controller 3 in Verbindung. Die Sender 4 senden zum Beispiel Licht, insbesondere infrarotes Licht aus, das vom gegenüberliegenden Empfänger des jeweiligen Empfängerpaares empfangen wird. In Figur 1 ist durch jeweils einemn Pfeil 6 ein Lichtstrahl symbolisiert.

Die Verbindung der Sender 4 zum Controller erfolgt über eine Verbindungsleitung 7. Die Verbindung der Empfänger 5 zum Controller 3 ist durch eine Verbindungsleitung 8 realisiert.

Der Controller 3 ist z.B. in der Lage, sequentiell den Empfängern 5 und den Sendern 4 Ansprechadressen zuzuteilen, so dass nach der Zuteilung durch die sequentielle Vorgabe eine physikalische Reihenfolge und damit auch die Anordnung von Empfänger-/Senderpaaren für eine entsprechende Verarbeitung durch den Controller 3 ableitbar ist.

Mit den Lichtstrahlen 6 kann eine vergleichsweise große Überwachungsfläche 6a auf vorhandene oder auftauchende Objekte überwacht werden. Beispielsweise steht ein Überwachungssystem 1 mit einer Rolltreppensteuerung in Verbindung, wobei die Sensoren 4, 5 die Rolltreppe auf Objekte überwachen. Nach einem Stromausfall kann die Rolltreppe automatisch anlaufen, sofern Sensoren 4, 5 kein Objekt im überwachten Bereich 6a feststellen.

In Figur 2 ist eine Verbindungsleitung 9 dargestellt, an welcher Sender oder Empfänger 4, 5 elektrisch angeschlossen sind. Die Verbindungsleitung 9 ist beispielsweise dreiadrig, wobei zwei Adern 10, 11 der Stromversorgung dienen und eine dritte Ader 12 als Datenleitung genutzt wird. Beispielsweise wird über die Datenleitung 12 der Empfänger 5 oder Sender 4 vom Controller 3 angesprochen, um ein Signal auszusenden, bzw. eine Auswertung, wenn es sich um den Empfänger 5 handelt, vorzunehmen.

In Figur 3 ist eine alternative Anschlussmöglichkeit eines Empfängers/Senders 4, 5 an die Verbindungsleitung 9 dargestellt.

Die Adern 10 und 11 der Verbindungsleitung 9 stellen wie in Figur 2 die Stromversorgung für den jeweiligen Empfänger/Sender 4, 5 zur Verfügung. Die Datenleitung 12 wird allerdings durch den jeweiligen Empfänger/Sender 4,5 unterbrochen. Wird über die Datenleitung 12 zum Beispiel ein Aktivierungssignal geschickt, das beim ersten Sender 4 eintrifft, wodurch dieser aktiv geschaltet wird, erfolgt die Aussendung eines Signals. Ein Empfänger liefert bei Aktivierung zum Beispiel ein Auswertesignal.

Im nächsten Takt wird der an der Datenleitung 12 nächstkommende Sender bzw. Empfänger aktiviert, und der zuvor aktivierte Sender bzw. Empfänger wird wieder deaktiviert.

Somit ist immer eine eindeutige Auswertung eines Sender-Empfängerpaares möglich. Außerdem ist dem Controller in Abhängigkeit vom Takt bekannt, welches Paar aus Sender und Empfänger gerade ausgewertet wird.

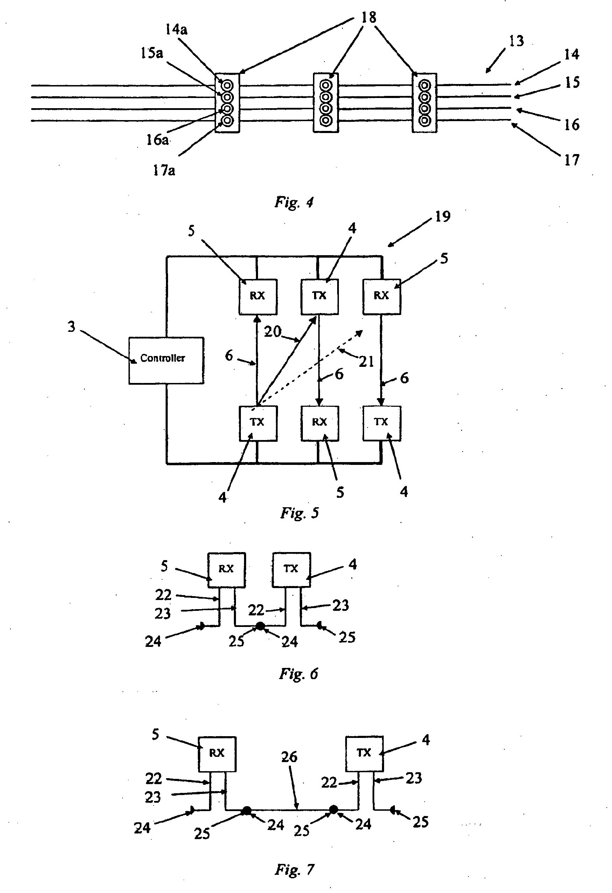

Figur 4 zeigt in einer schematischen Darstellung eine Busleitung 13 vier Adern 14-17. Auf der Busleitung sind, ohne die Busleitung 13 zu unterbrechen, Steckerelemente 18, aufgesetzt, zum Beispiel aufgeklippst, wobei die Steckerelemente 18 für jede Ader 14-17 einen Anschlusskontakt 14a bis 17a bereit stellen. An einem derartigen Steckerelement kann in einfacher Weise ein Empfänger 5 oder Sender 4 mittels eines passenden Gegenstücks angesteckt werden. Die Abstände der Steckerelemente 18 können individuell auf die gewünschte Positionierung der Sensoren ausgelegt werden.

In Figur 5 ist ein Überwachungssystem 19 abgebildet., das Paare aus Sendern 4 und Empfängern 5 zur Erzeugung von Überwachungslichtstrahlen 6 umfasst, wobei die Paare aus Sender 4 und Empfänger 5 alternierend angeordnet sind, so dass auf einer Seite auf einen Sender 4 ein Empfänger 5 folgt und auf den Empfänger 5 wiederum ein Sender 4.

Das hat den Vorteil, dass ein Sender 4 auf der gegenüber liegenden Seite benachbart zum zugehörigen Empfänger 5 ebenfalls einen Sender 4 vorfindet, den ein Übersprechlichtstrahl 20, das heißt ein Lichtstrahl, der nicht zum gehörigen Empfänger 5 läuft, unbeeinflusst lässt. Es müsste schon ein Lichtstrahl 21 entstehen, damit ein übernächster Empfänger 5 getroffen wird. Ein derartig starkes Übersprachverhalten ist jedoch bei entsprechender Dimensionierung unwahrscheinlich, womit mit dieser Anordnung eine höhere Sicherheit bei der Überwachung erreicht werden kann.

Die Figuren 6 und 7 zeigen zwei Verschaltungsbeisptele für Sender 4 und Empfänger 5. Jeder Sender 4 und Empfänger 5 weist zwei Anschlussleitungen z22, 23 auf, an deren Enden jeweils ein Steckerelement 24, 25 angeschlossen ist.
Die Steckerelemente 24,25 sind vorzugsweise so ausgelegt, dass lediglich eine sinnvolle Verbindung zu einem Sender und/oder Empfänger hergestellt werden kann. In Figur 6 wurde z.B. der Empfänger 5 mit einem Sender 4 elektrisch verbunden.

Um insbesondere größere Distanzen überbrücken zu können, sind auch Verbindungskabel 26 denkbar, die mit entsprechenden Steckerelementen 24, 25 ausgestattet sind. Ein solcher Verbund ist in Figur 7 abgebildet.

Die Steckerelemente sich vorzugsweise so ausbilden, dass nur vorgegebene Kombinationen möglich sind, z.B. Steckerelement 24 kann nur mit einem Steckerelement 25 kombiniert werden. Dadurch können falsche Verbindungen vermieden werden.

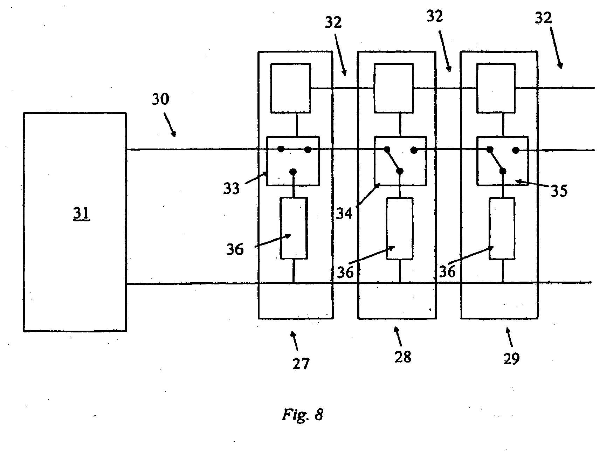

Mit Figur 8 soll der Aspekt der Erfindung verdeutlicht werden, der sich auf das Verteilen von Adressen an Busteilnehmer 27, 28, 29, z.B. Empfänger oder Sender, an einem Datenbus 30 bezieht.

In Figur 8 sind die drei Busteilnehmer 27, 28, 29 über den Datenbus 30 mit einem Controller 31 verbunden. Außerdem sind benachbarte Busteilnehmer über eine Verbindung 32 miteinander verbunden. In einem Ausgangszustand sind den Busteilnehmern 27, 28, 29 keine Adressen zugewiesen.

Die Busteilnehmer 27, 28, 29 besitzen Schalteinheiten 33, 34, 35.

Solange ein Busteilnehmer keine Adresse besitzt, ist die Schalteinheit 33, 34, 35 in einem Schaltzustand, dass ein Abschlusselement, z.B. ein Abschlusswiderstand 36, den Bus elektrisch abschließt.

In Figur 8 sind die Busteilnehmer 28 und 29 in dieser Schaltstellung, so dass der mittlere Busteilnehmer 28 mittels des Abschlusswiderstands 36 den Busabschluss bildet.

Der weitere Busteilnehmer 29 ist durch die Schalterstellung der Schalteinheit 34 vom Bus abgekoppelt.

Der Controller 31 kann damit mit dem Busteilnehmer 27 und dem Busteilnehmer 28 kommunizieren. Zur Adressvergabe schickt der Controller 31 eine entsprechende Information an alle Busteilnehmer, die noch keine Adresse erhalten haben. Gemäß Figur 8 kann der Busteilnehmer 28 diese Information empfangen. Der weitere Busteilnehmer 29 ist vom Bus getrennt. Der Busteilnehmer 27 hat bereits eine Adresse erhalten.

Sobald ein Busteilnehmer eine Adresse erhalten hat, wird die Schalteinheit 33 in eine Schaltposition, wie im Busteilnehmer 27 abgebildet, gebracht, so dass der darauf folgende nächste Busteilnehmer, im vorliegenden Fall der Busteilnehmer 28, zur Adressierung angesprochen werden kann. Genau dieser Zustand ist in Figur 8 dargestellt. Auf diese Weise wird erreicht, dass die Busteilnehmer automatisch mit einer Adresse versehen werden können und zwangsläufig dadurch die physikalische Reihenfolge der Busteilnehmer dem Controller 31 zur Verfügung steht.

Sind alle Busteilnehmer adressiert, so sind keine Abschlusswiderstände mehr zugeschaltet, sondern alle Schalteinheiten 33, 34, 35 befinden sich in einem Schaltzustand, wie in dem Busteilnehmer 27 dargestellt.

Um dennoch sicherzustellen, dass der Datenbus 30 elektrisch in gewünschter Weise abgeschlossen ist, um z.B. Signalreflexionen zu vermeiden, kann durch entsprechende Maßnahmen der Abschlusswiderstand des letzten Moduls, z.B. durch ein Zeitglied oder aus der Analyse der Kommunikation, die auf dem Bus abläuft, den Abschlusswiderstand 36 wieder zuschalten.

Auch denkbar ist, dass ein Busteilnehmer, der noch keine Adresse hat, ein Signal an die jeweiligen Nachbarn abgibt. Erst wenn ein Busteilnehmer eine Adresse erhalten hat und außerdem noch ein Signal eines Nachbarn erhält, wird eine Umschaltung der Schalteinheit 33, 34, 35 vorgenommen. Damit wird der in der Reihenfolge letzte Busteilnehmer zwar adressiert, es wird jedoch die Schalteinheit 35 in der Schaltstellung belassen, die den Abschlusswiderstand 36 an den Datenbus 30 legt.

### Bezugszeichenliste:

- 1: Überwachungssystem
- 2: Sensornetz
- 3: Controller
- 4: Sender
- 5: Empfänger
- 6: Lichtstrahl
- 6a: Überwachungsfläche
- 7: Verbindungsleitung
- 8: Verbindungsleitung
- 9: Verbindungsleitung
- 10: Ader
- 11: Ader
- 12: Ader
- 13: Busleitung
- 14: Ader
- 14a: Anschlusskontakt
- 15: Ader
- 15a: Anschlusskontakt
- 16: Ader
- 16a: Anschlusskontakt
- 17: Ader
- 17a: Anschlusskontakt
- 18: Steckerelement
- 19: Überwachungssystem
- 20: Lichtstrahl
- 21: Lichtstrahl
- 22: Anschlussleitung
- 23: Anschlussleitung
- 24: Steckerelemente
- 25: Steckerelement
- 26: Verbindungskabel
- 27: Busteilnehmer
- 28: Busteilnehmer
- 29: Busteilnehmer
- 30: Datenbus
- 31: Controller
- 32: Verbindung
- 33: Schalteinheit
- 34: Schalteinheit
- 35: Schalteinheit
- 36: Abschlusswiderstand

## Patentansprüche

1. System (1, 19) zur Feststellung eines Objekts in einer Überwachungsfläche (6a) mit einer Mehrzahl von Sensoren (4, 5) bestehend aus wenigstens einem Sender (4) und wenigstens einem Empfänger (5) sowie einer Elektronikeinheit (3) zur Auswertung der Empfänger (5), **dadurch gekennzeichnet, dass** die mehreren Sender und die mehreren Empfänger jeweils busfähig sind und über ein Bussystem mit der Elektronikeinheit verbunden sind, dass die Elektronikeinheit in der Lage ist, den Sendern und Empfängern eine Ansprechadresse zuzuteilen, wobei eine Adresszuteilung in einer Weise erfolgt, dass nach der Adresszuteilung eine Zuordnung von Empfängern zu Sendern ermöglicht ist und nach der Verteilung der Adressen die physikalische Reihenfolge der Sender und Empfänger der Elektronikeinheit zur Verfügung steht.

2. System nach Anspruch 1, **dadurch gekennzeichnet, dass** Sender (4) und/oder Empfänger (5) in separaten Baueinheiten angeordnet sind.

3. System nach einem der vorhergehenden Ansprüche, **dadurch gekennzeichnet, dass** die Elektronikeinheit (3) dazu ausgelegt ist, selektiv Empfänger (5) auszuwerten.

4. System nach einem der vorhergehenden Ansprüche, **dadurch gekennzeichnet, dass** Empfänger (5) dazu ausgebildet sind, ein empfängerbezogenes Objekterkennungssignal zu erzeugen.

5. System nach einem der vorhergehenden Ansprüche, **dadurch gekennzeichnet, dass** die Elektronikeinheit (3) ausgebildet ist, die Empfänger (5) für eine Auswertung sequentiell anzusprechen.

6. System nach einem der vorhergehenden Ansprüche, **dadurch gekennzeichnet, dass** die Elektronikeinheit (3) dazu ausgebildet ist, Muster auszuwerten, in welcher Abfolge Empfänger (5) ein Objekt erkennen.

7. System nach einem der vorhergehenden Ansprüche, **dadurch gekennzeichnet, dass** Empfänger (5) auf der Basis von Licht arbeiten.

8. System nach einem der vorhergehenden Ansprüche, **dadurch gekennzeichnet, dass** Empfänger (5) auf der Basis von Ultraschall arbeiten.

9. System nach einem der vorhergehenden Ansprüche, **dadurch gekennzeichnet, dass** Empfänger (5) und/oder Sender (4) über Steckverbinder (18) miteinander in Verbindung stehen.

10. System nach einem der vorhergehenden Ansprüche, **dadurch gekennzeichnet, dass** die Elektronikeinheit (3) Anzeigemittel umfasst, die anzeigen, welcher Empfänger (5) ein Objekt detektiert.

11. System nach einem der vorhergehenden Ansprüche, **dadurch gekennzeichnet, dass** die Elektronikeinheit dazu ausgelegt ist, Sender (4) gezielt ansteuern zu können.

12. System nach einem der vorhergehenden Ansprüche, **dadurch gekennzeichnet, dass** Sender (4) und Empfänger (5) gegenüberliegend angeordnet sind, wobei jeweils Sender (4) und Empfänger (5) auf unterschiedlichen Seiten liegen.

## Claims

1. System (1, 19) for detecting an object in a monitoring area (6a) with a plurality of sensors (4, 5), comprising at least one transmitter (4) and at least one receiver (5) and an electronics unit (3) for evaluating the receivers (5), **characterized in that** the multiple transmitters and the multiple receivers are each bus-compatible and are connected to the electronics unit via a bus system, **in that** the electronics unit is able to allocate a contact address to the transmitters and receivers, the allocation of an address being performed in such a way that after address allocation it is possible to assign receivers to transmitters and after distribution of the addresses the physical order of the transmitters and receivers is available to the electronics unit.

2. System according to Claim 1, **characterized in that** transmitters (4) and/or receivers (5) are arranged in separate units.

3. System according to one of the preceding claims, **characterized in that** the electronics unit (3) is configured to evaluate receivers (5) selectively.

4. System according to one of the preceding claims, **characterized in that** receivers (5) are configured to generate a receiver-related object recognition signal.

5. System according to one of the preceding claims, **characterized in that** the electronics unit (3) is configured to address the receivers (5) sequentially for evaluation.

6. System according to one of the preceding claims, **characterized in that** the electronics unit (3) is configured to evaluate patterns for the order in which receivers (5) recognize an object.

7. System according to one of the preceding claims, **characterized in that** receivers (5) operate on the basis of light.

8. System according to one of the preceding claims, **characterized in that** receivers (5) operate on the basis of ultrasound.

9. System according to one of the preceding claims, **characterized in that** receivers (5) and/or transmitters (4) are connected to one another by means of plug connectors (18).

10. System according to one of the preceding claims, **characterized in that** the electronics unit (3) comprises display means which show which receiver (5) detects an object.

11. System according to one of the preceding claims, **characterized in that** the electronics unit is configured to be able to actuate transmitters (4) specifically.

12. System according to one of the preceding claims, **characterized in that** transmitters (4) and receivers (5) are arranged opposite one another, transmitters (4) and receivers (5) being on different sides in each case.

## Revendications

1. Système (1, 19) de détection d'un objet sur une surface de surveillance (6a), comportant une pluralité de capteurs (4, 5) constitués d'au moins un émetteur (4) et d'au moins un récepteur (5), ainsi qu'une unité électronique (3) pour l'évaluation des récepteurs (5), **caractérisé en ce que** les émetteurs et les récepteurs sont aptes aux bus et sont reliés par l'intermédiaire d'un système de bus à l'unité électronique, **en ce que** l'unité électronique est capable d'affecter une adresse de contact aux émetteurs et aux récepteurs, une affectation d'adresse étant réalisée de telle manière qu'après affectation de l'adresse, il est possible d'associer les récepteurs aux émetteurs et après la distribution des adresses la suite physique des émetteurs et des récepteurs de l'unité électronique est à disposition.

2. Système selon la revendication 1, **caractérisé en ce que** les émetteurs (4) et/ou les récepteurs (5) sont disposés dans des unités modulaires séparées.

3. Système selon l'une des revendications précédentes, **caractérisé en ce que** l'unité électronique (3) est conçue pour évaluer des récepteurs (5) de façon sélective.

4. Système selon l'une des revendications précédentes, **caractérisé en ce que** les récepteurs (5) sont conçus pour produire un signal d'identification d'objet spécifique au récepteur.

5. Système selon l'une des revendications précédentes, **caractérisé en ce que** l'unité électronique (3) est conçue pour s'adresser de façon séquentielle aux récepteurs (5) en vue d'une évaluation.

6. Système selon l'une des revendications précédentes, **caractérisé en ce que** l'unité électronique (3) est conçue pour évaluer des motifs selon l'ordre dans lequel les récepteurs (5) détectent un objet.

7. Système selon l'une des revendications précédentes, **caractérisé en ce que** les récepteurs (5) fonctionnent sur la base d'une lumière.

8. Système selon l'une des revendications précédentes, **caractérisé en ce que** les récepteurs (5) fonctionnent sur la base d'ultrasons.

9. Système selon l'une des revendications précédentes, **caractérisé en ce que** les récepteurs (5) et/ou les émetteurs (4) sont reliés ensemble par des connecteurs enfichables (18).

10. Système selon l'une des revendications précédentes, **caractérisé en ce que** l'unité électronique (3) comporte des moyens d'affichage qui affichent quel récepteur (5) détecte un objet.

11. Système selon l'une des revendications précédentes, **caractérisé en ce que** l'unité électronique est conçue pour pouvoir commander de manière ciblée des émetteurs (4).

12. Système selon l'une des revendications précédentes, **caractérisé en ce que** les émetteurs (4) et les récepteurs (5) sont disposés les uns en face des autres, les émetteurs (4) et les récepteurs (5) étant situés chacun sur des côtés différents.
